(19) Europäisches Patentamt

European Patent Office

Office européen des brevets

(11) Veröffentlichungsnummer: **0 333 702 B1**

## (12) EUROPÄISCHE PATENTSCHRIFT

(45) Veröffentlichungstag der Patentschrift: **26.01.94**

(51) Int. Cl.⁵: **F02D 31/00**, F02D 41/14

(21) Anmeldenummer: **89890079.0**

(22) Anmeldetag: **16.03.89**

(54) Verfahren zum Steuern und Regeln der Brennkraftmaschine eines Kraftfahrzeuges.

(30) Priorität: **16.03.88 DE 3808820**

(43) Veröffentlichungstag der Anmeldung:
**20.09.89 Patentblatt 89/38**

(45) Bekanntmachung des Hinweises auf die
Patenterteilung:
**26.01.94 Patentblatt 94/04**

(84) Benannte Vertragsstaaten:
**AT CH DE ES FR GB IT LI SE**

(56) Entgegenhaltungen:
**EP-A- 0 177 297**
**WO-A-87/02418**
**DE-A- 3 329 800**

(73) Patentinhaber: **ROBERT BOSCH AKTIENGE-
SELLSCHAFT**
**Geiereckstrasse 6**
**A-1110 Wien(AT)**

(72) Erfinder: **Höfinger, Raimund**
**Jägerstrasse 26/20**
**A-1200 Wien(AT)**
Erfinder: **Augesky, Christian, Dipl. Ing.**
**Innstrasse 26/18**
**A-1200 Wien(AT)**
Erfinder: **Heiss, Michael, Dipl. Ing.**
**Waisenhorngasse 115**
**A-1235 Wien(AT)**

(74) Vertreter: **Matschnig, Franz, Dipl.-Ing.**
**Siebensterngasse 54**
**Postfach 252**
**A-1070 Wien (AT)**

**Beschreibung**

Die Erfindung bezieht sich auf ein Verfahren zum Steuern und Regeln der Brennkraftmaschine eines Kraftfahrzeuges, bei welchem in Abhängigkeit von Betriebsgrößensignalen, wie der Drehzahl, der Gaspedalstellung, der Motortemperatur etc. in einer Recheneinrichtung ein Ausgangssignal errechnet und dieses zur Steuerung eines elektromechanischen Stellgliedes für die Kraftstoff- und/oder Luftmenge, z.B. der Einspritzpumpe eines Dieselmotors herangezogen wird, wobei die P-, I- und D-Anteile eines Drehzahlregelsignales eines PID-Reglers getrennt ermittelt und sodann addiert werden.

Elektronischen Reglern von Kraftfahrzeug-Brennkraftmaschinen, insbesondere von Dieselmotoren wird neben anderen Größen als wichtigste Regelgröße die Motordrehzahl in Form eines Drehzahlsignals zugeführt. In Abhängigkeit von den zugeführten Größen wird, meist unter Berücksichtung abgespeicherter Kennlinienfelder, ein Ausgangssignal berechnet, welches elektromechanisch auf ein Stellglied, bei einem Dieselmotor, z.B. die Regelstange der Einspritzpumpe oder das Mengenstellglied von Pumpedüsen einwirkt.

Ein solcher Regler weist im allgemeinen bezüglich der Drehzahlregelung eine PID-Charakteristik mit einem Proportional-, Integral- und Differentialanteil (im folgenden nur kurz P-, I- und D-Anteil genannt) auf, wobei die Einflüsse dieser Anteile auf das Verhalten einer Regelstrecke dem Fachmann bekannt sind und hier nicht im Detail erörtert werden.

Die Regelung einer Brennkraftmaschine wirft besondere Probleme auf, die bei der Konzeption eines Regelverfahrens bzw. Reglers berücksichtigt werden sollten. Insbesondere ist die Dynamik des Motors drehzahlabhängig. Daher ist auch in gewissen Betriebssituationen, z.B. Einkuppeln bei niedriger Drehzahl, Auskuppeln und Gaswegnehmen etc. ein hoher D-Anteil der Regelung erwünscht, damit Lastwechselreaktionen rasch ausgeglichen werden können. In anderen Arbeitsbereichen, insbesondere in jenen, in welchen das Fahrzeug zu Ruckelschwingungen neigt, muß der D-Anteil geringer sein.

Es wäre möglich, den D-Anteil in Abhängigkeit von der Drehzahl in einem Speicher des Reglers als Kennfeld abzulegen. Auf diese Weise könnten beliebige Funktionen D(n) festgelegt werden, doch ist das Arbeiten unter Verwendung eines solchen Speichers sehr rechenintensiv, so daß hohe Kosten bzw. unerwünscht lange Rechenzeiten die Folge sind. In diesem Zusammenhang ist anzumerken, daß in der DE-A 33 29 800 ein drehzahlabhängiger D-Anteil erwähnt wird, ohne daß jedoch auf die Art der Abhängigkeit eingegangen wird.

Ziel der Erfindung ist die Schaffung eines Verfahrens, das in möglichst einfacher und zuverlässiger Weise eine den Gegebenheiten einer Brennkraftmaschine für ein Kraftfahrzeug, insbesondere eines Dieselmotors angepaßte Ermittlung des D-Anteils der Drehzahlregelung ermöglicht.

Dieses Ziel läßt sich mit einem Verfahren nach Patentanspruch 1 erreichen, wobei bevorzugte Modifikationen in den Unteransprüchen gekennzeichnet sind.

Die Erfindung samt ihren Vorteilen ist im folgenden an Hand einer beispielsweisen Ausführungsform unter Bezugnahme auf die Zeichnung näher erläutert, in welcher zeigen:

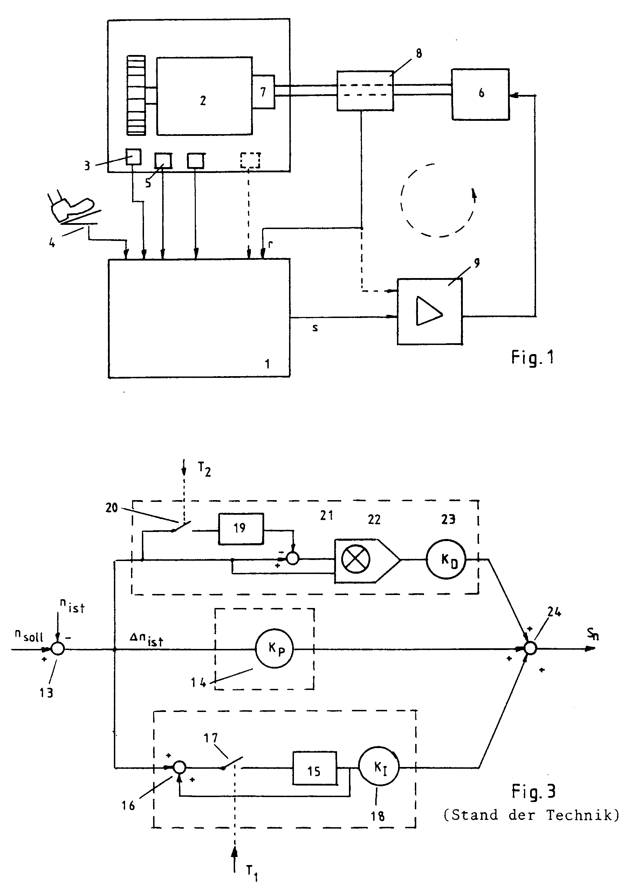

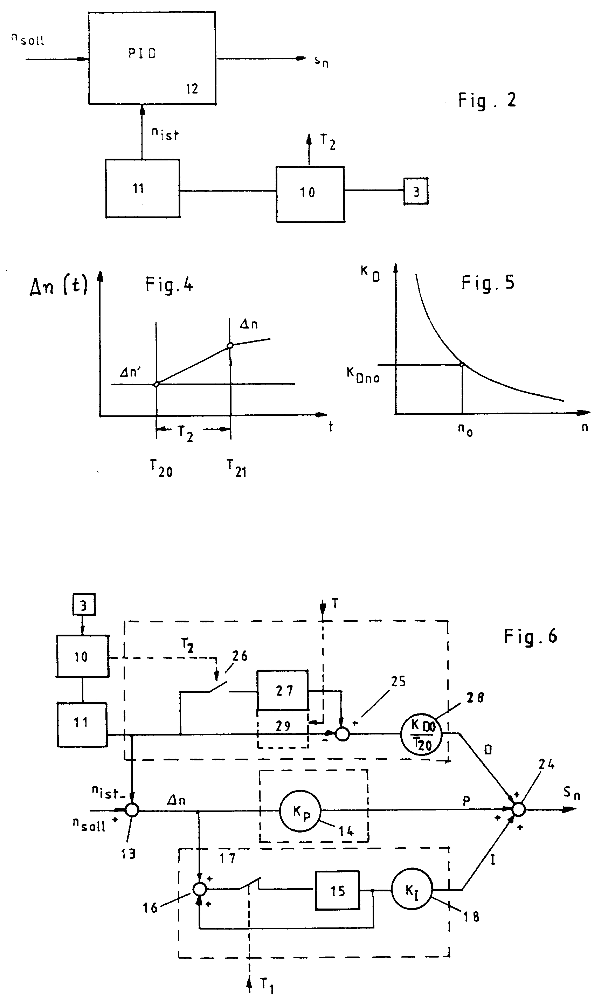

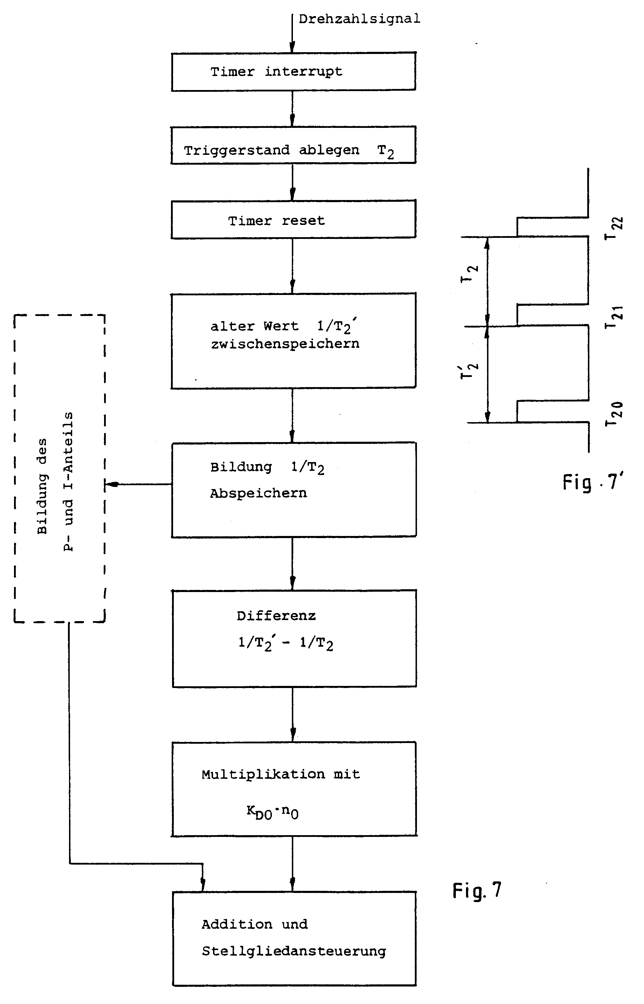

Fig. 1 und Fig. 2 in einem Prinzipschema die Regelung einer Brennkraftmaschine unter Zuhilfenahme einer Rechenschaltung, Fig. 3 einen Teil einer Rechenschaltung nach dem Stand der Technik, Fig. 4 ein Diagramm zur Erläuterung der Berechnung des D-Anteils, Fig. 5 in einem Diagramm die erfindungsgemäße Gewichtung des D-Anteils, Fig. 6 einen Teil einer Rechenschaltung, die zur erfindungsgemäßen Ermittlung des D-Anteils heranziehbar ist und Fig. 7 an Hand eines Flußdiagramms die Ermittlung des D-Anteils.

Gemäß Fig. 1 werden einer elektronischen Rechenschaltung 1 verschiedene Betriebsgrößen eines Motors 2, im vorliegenden Fall eines Dieselmotors bzw. des zugehörigen Fahrzeuges zugeführt. Es handelt sich dabei in erster Linie um Signale eines Drehzahlgebers 3 und eines Gaspedalstellungssensors 4, weiters z.B. eines Motortemperatursensors 5 usw. Ein elektromechanisches Stellglied 6, beispielsweise ein auf das Mengenstellglied einer Verteilereinspritzpumpe 7 wirkender Stellmagnet, ist mechanisch mit einem Rückmelder 8 verbunden, dessen für die Stellung des Stellgliedes 6 repräsentatives Ausgangssignal r an die Rechenschaltung 1 zurückgeführt wird. Das Stellglied 6 wird über eine Treiberstufe 9 von dem Ausgangssignal s der Rechenschaltung 1 angesteuert. In bekannter Weise kann ein hier nicht gezeigter, nur strichliert angedeuteter Servokreis für die Stellgliedansteuerung vorgesehen sein (vgl. DE-A-3730443).

Fig. 2 zeigt einen Ausschnitt der Rechenschaltung 1. Das Ausgangssignal des Drehzahlgebers 3 wird in einem Drehzahlmeßblock 10 und gegebenenfalls in einem Filter 11 zu einem Drehzahlsignal $n_{ist}$ verarbeitet. Der Meßblock 10 kann in bekannter Weise Impulsformer, Frequenzteiler oder -vervielfacher enthalten, wobei auf die Art des Drehzahlgebers 3 und die Anzahl der pro Motorumdrehung anfallenden Impulse Rücksicht zu nehmen ist. Ebenso kann bei Ausfall des Drehzahlgebers 3 dem Meßblock 10 das Signal eines weiteren Drehzahlgebers, z.B. der Lichtmaschine des Fahrzeuges zugeführt werden, wobei in diesem Zusammenhang auf die DE-A-35 01 435 verwiesen wird.

Das so erhaltene Drehzahlsignal $n_{ist}$ wird einem PID-Reglerblock 12 zugeführt, der als Sollgröße das in der Rechenschaltung 1 ermittelte Solldrehzahlsignal $n_{soll}$ zugeführt wird. In bekannter Weise wird das Signal $n_{soll}$ von dem Gaspedalsensor 4 und verschiedenen anderen Betriebsparametern des Motors 2 abhängen. In dem PID-Reglerblock 12 wird sodann das Drehzahlregelsignal $s_n$ ermittelt, das sich ganz allgemein als

$$s_n = P + I + D \qquad (1)$$

anschreiben läßt.

Fig. 3 zeigt in allgemeiner Form, daß der P-, I- und D-Anteil entsprechend der gewünschten Regelcharakteristik getrennt errechnet werden.

Einem Summenpunkt 13 wird das durch die Rechenschaltung 1 vorgegebene Solldrehzahlsignal $n_{soll}$ sowie das Istdrehzahlsignal $n_{ist}$ zugeführt, um die Differenz

$$\Delta n = n_{soll} - n_{ist} \qquad (2)$$

zu bilden.

Der Proportionalanteil ergibt sich durch einfache Multiplikation mit einem Faktor $K_p$ in einem Multiplikator 14

$$P = \Delta n . K_p \qquad (3)$$

Die Ermittlung des Integralanteiles I erfolgt durch Integration über die Zeit und Multiplikation mit einem Faktor $K_I$

$$I = K_I . \int \Delta n \, dt \qquad (4)$$

Hiebei erfolgt die Integration beispielsweise durch Aufsummieren in einem Speicher 15 zu Taktzeiten $T_1$ unter Zuhilfenahme eines Summenpunktes 16 und eines gesteuerten Schalters 17 sowie eine Multiplikation mit einem konstanten Faktor $K_I$ in einem Multiplikator 18. Ähnlich erfolgt die Bildung des Differentialanteils D

$$D = K_D . \frac{d \, \Delta n}{dt} \qquad (5)$$

bzw. die Bildung des Differenzquotienten durch Differenzbildung und Division durch ein Zeitintervall $\Delta + = T_{21} - T_{20} = T_2$ sowie Multiplikation mit einem Faktor $K_D$

$$D = K_D . \frac{\Delta n - \Delta n'}{T_2} \qquad (6)$$

Hiezu dienen nach dem Stand der Technik ein Speicher 19, ein gesteuerter Schalter 20, ein Summenpunkt 21, ein Multiplikator 22 für die Multiplikation mit $1/T_2$ und ein Multiplikator 23 für die Multiplikation mit einem konstanten Faktor $K_D$.

Die drei auf diese Weise erhaltenen Anteile P, I und D werden schließlich in einem Summenpunkt 24 zu dem Drehzahlregelsignal $s_n$ addiert.

Bedeuten n' die Drehzahl zu einer Zeit $T_{20}$ und n die Drehzahl zum drauf folgenden Zeitpunkt $T_{21}$, wobei dies sinngemäß auch für $\Delta n'$ und $\Delta n$ (siehe Fig. 4) gilt, so ist wegen

$$\Delta n = n_{soll} - n_{ist} \qquad (2)$$

3

und

$$\Delta n' = n_{soll} - n_{ist}' \qquad (2')$$

$$\Delta n - \Delta n' = -n_{ist} + n_{ist}' \qquad (7)$$

d.h. die Summenbildung im Summenpunkt 13 ist für die Differentiation ohne Bedeutung und die Differentiation bzw. Differenzbildung kann in gleicher Weise von n oder $\Delta$ n ausgehen. Hiebei ist eine entsprechend langsame Änderung von $n_{soll}$ vorausgesetzt, sodaß annähernd $n_{soll}$ = const. gilt.

Mit Gl-(7) läßt sich Gl-(6) somit auch anschreiben als

$$D = K_D \cdot \frac{n_{ist}' - n_{ist}}{T_2} \qquad (8)$$

Da die Motordrehzahl auf Grund der Verbrennungstakte periodischen Schwankungen unterworfen ist, geht man von einer über einen Verbrennungszyklus (Drehwinkel $\alpha$, Zeitdauer $T_2$) gemittelten Drehzahl $\bar{n}$ aus.

Bei einem 6-Zylindermotor z.B. wird $\alpha = 120°$.

Es gilt somit

$$\alpha = \bar{\omega} \cdot T_2 \qquad (9)$$

und

$$n_{ist} = \bar{n} = \bar{\omega} \frac{60}{2\pi} = K_n \cdot \frac{1}{T_2} \qquad (10)$$

Der Faktor "60" tritt auf, wenn die Drehzahl in Upm gemessen wird. Mit Einführung des Skalierungsfaktors $K_n$

$$K_n = \frac{60 \cdot \alpha}{2\pi} \qquad (11)$$

ergibt sich bei Bildung des Differenzenquotienten

$$D = K_D \frac{\Delta n_{ist}}{\Delta t} = K_D \cdot K_n \cdot \frac{1}{T_2} \left( \frac{1}{T_2'} - \frac{1}{T_2} \right) \qquad (12)$$

wobei auch hier $T_2$ den neuesten und $T_2'$ den vorhergehenden Meßwert bedeuten. Im Gegensatz zu der bei der Integration verwendeten Periode $T_1$, die einem konstanten, in der Rechenschaltung erzeugten Takt entspricht, ist die Dauer $T_2$ entsprechend der Motordrehzahl variabel (vgl. Gl. 9).

Die erfindungsgemäße Lösung sieht nun eine hyperbolische Gewichtung des D-Anteils vor, die umgekehrt proportional zu der Motordrehzahl erfolgt:

4

$$D = K_{Do}\, \frac{n_o}{n} \cdot \frac{\Delta n_{ist}}{\Delta t} = K_D(n) \cdot \frac{\Delta n_{ist}}{\Delta t} \qquad (13)$$

mit

$$K_D(n) = K_{Do} \cdot \frac{n_o}{n} \qquad (14)$$

Es erfolgt somit ein Übergang von einem konstanten Faktor $K_D$ zu einem von der Drehzahl abhängigen Faktor $K_D(n)$, wie in Fig. 5 dargestellt. $n_o$ ist eine gewählte Bezugsdrehzahl, beispielsweise $n_o = 1000$ Upm.
Die Einführung dieser Gewichtung führt daher zu

$$D = K_{Do} \cdot n_o \left( \frac{1}{T_2'} - \frac{1}{T_2} \right) = \frac{K_{Do}}{K_n} (n'_{ist} - n_{ist}) \cdot n_o \qquad (15)$$

mit

$$D = \frac{K_{Do}}{K_n} \cdot n_o \left( n'_{ist} - n_{ist} \right) \qquad (16)$$

Das Verfahren nach der Erfindung reduziert sich somit in überraschend einfacher Weise darauf, zur Ermittlung des D-Anteils jeweils einen mittleren Drehzahlwert $n'_{ist}$ abzuspeichern, von diesem gespeicherten Wert zum darauffolgenden Taktzeitpunkt den aktuellen mittleren Drehzahlwert $n_{ist}$ abzuziehen und sodann die erhaltene Differenz mit einem konstanten Faktor $K_{Do}.n_o/K_n$ zu multiplizieren. Die entsprechende Prinzipschaltung, die im allgemeinen in der Rechenschaltung 1 softwaremäßig realisiert ist, ist in Fig. 6 dargestellt und nachfolgend beschrieben. Wie im Zusammenhang mit Fig. 2 bereits beschrieben, wird in dem Drehzahlmeßblock 10 mit einem allenfalls nachgeschalteten Filter 11 das Drehzahlsignal $n_{ist}$ gewonnen, wobei der Meßblock 10 auch das Taktsignal $T_2$ liefert. Dieses Signal könnte aber auch von einem weiteren Drehzahlgeber, der entsprechenden Marken an einem sich drehenden Teil des Motors 2 abtastet, hergeleitet sein.

Die Schaltung gleicht in ihren für die Gewinnung des P- und I-Anteils maßgeblichen Zweigen völlig jener nach Fig. 3 und für gleiche Elemente werden gleiche Bezugszeichen verwendet.

Für die nach dem erfindungsgemäßen Verfahren durchgeführte Bildung des D-Anteils wird das Drehzahlsignal $n_{ist}$ von dem jeweils vorgehenden Drehzahlsignal $n'_{ist}$ abgezogen, wozu ein Summenpunkt 25, ein vom Takt $T_2$ gesteuerter Schalter 26 sowie ein Speicher 27, wie dargestellt, verwendet werden. Die erhaltene Differenz wird in einem Multiplikator 28 mit dem konstanten Faktor $K_{Do}.n_o/K_n$ multipliziert, sodaß man nach Gleichung (16) den D-Anteil erhält, der in dem Summenpunkt 24 mit dem P- und dem I-Anteil vereinigt wird. Im allgemeinen wird noch ein weiterer Speicher 29 oder Register vorgesehen sein (strichliert gezeichnet), der zur Speicherung der aktuellen Drehzahlwerte dient und der, ebenso wie der Speicher 27, von einem Rechnertakt T steuerbar ist.

Da das Signal $n_{soll}$ im allgemeinen von verschiedenen, sich gegenüber der Drehzahl langsam ändernden Betriebsgrößen abhängt, kann es für die vorliegenden Zwecke als konstant angesehen werden. Das gewonnene Drehzahlregelsignal $s_n$ hängt natürlich gleichfalls von diesen Größen ab, sodaß das Signal $s_n$ meist das Ausgangssignal s der Rechenschaltung unmittelbar darstellt.

5

Die Steuereinrichtung nach der Erfindung kann zwar auch in analoger Weise realisiert werden, doch wird die Rechenschaltung im allgemeinen ein oder mehrere Mikrorechner sowie entsprechende Speicher enthalten und die Rechenschaltung wird softwaremäßig realisiert sein.

Die Erfindung ermöglicht durch die ihr eigene Gewichtung in einfacher Weise die Anpassung des D-Anteiles des Reglers an das dynamische Verhalten des Motors, insbesondere eines Dieselmotors bzw. des Systems Motor-Kraftfahrzeug. Im Vergleich zu der ungewichteten, d.h. hier drehzahlunabhängigen Ermittlung des D-Anteiles ergibt sich in überraschender Weise eine Vereinfachung der Steuereinrichtung durch Fortfall der Division durch die Zeitintervalle $T_2$.

In Fig. 7 ist einem Flußdiagramm die Ermittlung des Stellgliedansteuersignales, ausgehend von einem Drehzahlpuls erläutert, wobei der erste Teil der Gleichung 15 maßgeblich ist. Das Signal des Drehzahlgebers besteht aus Impulsen, die zu Zeiten $T_{20}$, $T_{21}$.... auftreten, sodaß aus der Differenz $T_{21} - T_{20}$ der Impulsabstand $T_2$ folgt, dessen Kehrwert der Ist-Drehzahl proportional ist.

Die Pulse werden einem Zähler zugeführt, der ständig mit fester Frequenz hochzählt und lösen, z.B. mit ihrer Vorderflanke, einen Interrupt aus. Der momentane Zählerstand wird in ein Register A abgelegt und der Zähler wird rückgesetzt. Diese Rücksetzung muß so schnell erfolgen, daß kein Impuls verlorengeht. Es ist aber auch möglich, den Zähler nicht rückzusetzen und ihn weiterlaufen zu lassen, wobei zur weiteren Berechnung Relativwerte verwendet werden.

Bevor der Wert $T_2$ weiterverarbeitet wird, wird aus einem weiteren Register B der aus dem vorhergehenden Arbeitszyklus erhaltene Wert $1/T_{2'}$ in ein Register C gebracht, das somit den Wert $1/T_{2'}$ enthält.

Aus dem aktuellen Wert $T_2$ (im Register A) wird der Kehrwert gebildet und in das Register B geladen. Die Inhalte der Register B und C werden in das Rechenwerk übertragen und es wird die Differenz $1/T_{2'} - 1/T_2$ gebildet und darauffolgend mit dem konstanten Faktor $K_{Do} . N_o$ multipliziert. Der so erhaltene D-Anteil wird schließlich mit den getrennt errechneten (hier nicht im Detail beschrieben) P- und I-Anteilen aufsummiert, sodaß man das Stellgliedansteuersignal erhält. Dieser Vorgang wiederholt sich wie oben beschrieben mit jeweils neuen $T_2$-Werten zyklisch.

Da Störsignale bzw. Meßunsicherheiten in der Praxis auftreten, kann es zweckmäßig sein, die erhaltenen $T_2$ bzw. $1/T_2$-Werte einer Filterung zu unterziehen, die nach bekannten Rekursiv- oder Transversalalgorithmen durchgeführt werden kann. Solche Filteralgorithmen gehören dem Stand der Technik an (z. B. "Halbleiterschaltungstechnik", U. Tietze, Ch. Schenk, Springer Verlag, 6. Auflage 1983 oder "Digitale Regelsysteme", R. Isermann, Springer Verlag 1977).

## Patentansprüche

1. Verfahren zum Steuern und Regeln der Brennkraftmaschine eines Kraftfahrzeuges, bei welchem in Abhängigkeit von Betriebsgrößensignalen, wie der Drehzahl, der Gaspedalstellung, der Motortemperatur etc. in einer Recheneinrichtung ein Ausgangssignal errechnet und dieses zur Steuerung eines elektromechanischen Stellgliedes für die Kraftstoff- und/oder Luftmenge, z.B. der Einspritzpumpe eines Dieselmotors herangezogen wird, wobei die P-, I- und D-Anteile eines Drehzahlregelsignales (Sn) eines PID-Reglers getrennt ermittelt und sodann addiert werden, dadurch gekennzeichnet, daß der D-Anteil des Drehzahlregelsignales (Sn) in Abhängigkeit von der Motordrehzahl (n) umgekehrt proportional gewichtet wird.

2. Verfahren nach Anspruch 1, dadurch gekennzeichnet, daß zur Bestimmung des D-Anteils ein Mittelwert der Motordrehzahl herangezogen wird.

3. Verfahren nach Anspruch 2, dadurch gekennzeichnet, daß der Mittelwert der Motordrehzahl jeweils über einen Verbrennungszyklus des Motors gebildet wird.

4. Verfahren nach einem der Ansprüche 2 oder 3, dadurch gekennzeichnet, daß zur Ermittlung des D-Anteils des Drehzahlregelsignales ($S_n$) in der Motordrehzahl proportionalen Zeitabständen ($T_2$), die einem konstanten Drehwinkel ($\alpha$) der Kurbelwelle entsprechen, aufeinanderfolgend mittlere Motordrehzahlen ($n_{ist}$, $n'_{ist}$) ermittelt werden, je die Differenz zweier solcher aufeinanderfolgender Drehzahlwerte gebildet und diese Differenz mit einem konstanten Faktor multipliziert wird.

## Claims

1. A method for controlling and regulating the internal combustion engine of a motor vehicle in which in dependence upon operating signal variables such as the rotational speed, the position of the accelerator pedal, the engine temperature etc., an output signal is calculated in a computer and this output signal is used to control an electronic adjusting member for the quantity of fuel and/or air for example of the fuel injection pump of a diesel engine, wherein the P-, I-and D- portions of a rotational speed control signal (Sn) of a PID regulator are determined separately and are thereupon summed, characterised in that the D-portion of the rotational speed control signal (Sn) is weighted inversely proportionally to the engine rotational speed (n).

2. A method according to claim 1, characterised in that an average value of the engine rotational speed is used to determine the D-portion.

3. A method according to claim 2, characterised in that the average value of the engine rotational speed is formed in each case over a combustion cycle of the engine.

4. A method according to one of claims 2 or 3, characterised in that for the purpose of determining the D-portion of the rotational speed control signal (Sn) in time intervals ($T_2$) proportional to the engine rotational speed, which time intervals correspond to a constant angle of rotation ($\alpha$) of the crankshaft consecutive average engine rotational speeds ($n_{ist}$, $n'_{ist}$) are determined and in each case the difference is formed between two such consecutive rotational speed values and this difference is multiplied with a constant factor.

**Revendications**

1. Procédé de commande et de réglage du moteur à combustion interne d'un véhicule, dans lequel on calcule, en fonction de signaux correspondants à des grandeurs de fonctionnement telles que le nombre de tours, la position de la pédale de commande des gaz, la température du moteur, etc, un signal de sortie dans un dispositif de calcul et on utilise ce signal pour la commande d'un organe de réglage électro-mécanique pour le carburant et la quantité d'air, par exemple la pompe d'injection d'un moteur Diesel, dans lesquels les composantes (P, I et D) d'un signal de réglage ($S_n$) du nombre de tours d'un régulateur de type PID sont obtenus séparément et sont de suite additionnés, caractérisé en ce que la composante (D) du signal de réglage ($S_n$) du nombre de tours en fonction du nombre de tours du moteur (n) est pondérée de façon inversement proportionnelle.

2. Procédé selon la revendication 1, caractérisé en ce que, afin de déterminer le composant (D), on utilise une valeur moyenne du nombre de tours du moteur.

3. Procédé selon la revendication 2, caractérisé en ce que la valeur moyenne du nombre de tours moteur est générée dans chaque cas sur un cycle de combustion du moteur.

4. Procédé selon l'une des revendications 2 ou 3, caractérisé en ce que, afin d'obtenir le composant (D) du signal de réglage du nombre de tours ($S_n$), dans des intervalles de temps ($T_2$) qui sont proportionnels au nombre de tours du moteur, on fournit la séquence de vitesse moyenne de rotation du moteur ($n_{ist}$, $n'_{ist}$) correspondant à un angle de révolution constant ($\alpha$) du vilebrequin, on forme pour chacun la différence de deux telles valeurs de nombre de tours qui se suivent directement, et on multiplie cette différence par un facteur constant.

Fig.1

Fig.3
(Stand der Technik)

Fig. 2

Fig. 4

Fig. 5

Fig. 6

Drehzahlsignal

Timer interrupt

Triggerstand ablegen $T_2$

Timer reset

alter Wert $1/T_2'$
zwischenspeichern

Bildung $1/T_2$
Abspeichern

Differenz
$1/T_2' - 1/T_2$

Multiplikation mit
$K_{D0} \cdot n_0$

Bildung des
P- und I-Anteils

Addition und
Stellgliedansteuerung

$T_2$

$T_2'$

$T_{22}$

$T_{21}$

$T_{20}$

Fig. 7'

Fig. 7